# EUROPEAN PATENT SPECIFICATION

(11) **EP 4 047 410 B1**
(45) Date of publication and mention of the grant of the patent: **09.04.2025**
(21) Application number: 20889966.6
(22) Date of filing: 19.11.2020
(51) Int. Cl.: G02B 26/10

(54) **MIRROR SCANNER**
SPIEGELSCANNER
DISPOSITIF DE BALAYAGE À MIROIR

(30) Priority: 19.11.2019 JP 2019208439
(43) Date of publication of application: 24.08.2022
(73) Proprietor: Pioneer Corporation, Tokyo 113-0021 (JP)
(72) Inventor: YABE Tomotaka, Kawagoe-shi, Saitama 350-8555 (JP); IWASAKI Shingo, Kawagoe-shi, Saitama 350-8555 (JP); OSHIMA Seiro, Kawagoe-shi, Saitama 350-8555 (JP); KITAZAWA Shogo, Tokyo 113-0021 (JP)
(74) Representative: Manitz Finsterwald Patent- und Rechtsanwaltspartnerschaft mbB
(86) International application number: PCT/JP2020/043179
(87) International publication number: WO 2021/100803

(56) References cited:
- JP-A- 2002 250 891
- JP-A- 2002 250 891
- JP-A- 2004 191 918
- JP-A- 2005 084 571
- JP-A- 2013 125 165
- JP-A- 2016 033 613
- JP-A- 2016 033 613
- US-B2- 9 798 135

## Description

### TECHNICAL FIELD

The present invention relates to a mirror scanner.

### BACKGROUND ART

There has been known a scanning device that emits a light toward a predetermined region while deflecting the light, and detects the light returning from the predetermined region, and thus, obtains various kinds of information regarding an object positioned in the predetermined region. In such a scanning device, a movable mirror, such as a Micro Electro Mechanical System (MEMS) mirror, is disposed as a part that deflects a light. As an optical scanning device having the movable mirror, there has been proposed an optical scanning device that has an electromagnet made of a yoke and a coil wound around the yoke, generates a magnetic field by flowing an alternating current to the coil, and drives the mirror by an interaction with a magnetic field of a permanent magnet (for example, Patent Document 1).

Patent Document 1: Japanese Unexamined Patent Application Publication No. 2009-69676.
JP 2002 250891 A describes an oscillating body device, such as an optical deflector, having a structure which can be downsized without impairment of durability.
JP 2016 033613 A refers to a mirror scanner.

### DISCLOSURE OF THE INVENTION

### PROBLEMS TO BE SOLVED BY THE INVENTION

In an optical scanning device, such as the above-described prior art, a yoke has a C shape (or a U shape), and a magnetic field generating end as an end portion of the yoke is disposed to face a permanent magnet provided on an opposite side surface (that is, a backside surface) of a light reflecting surface of a mirror. In view of this, it is necessary that the backside surface of the mirror has a space corresponding to a height when the C-shaped yoke is longitudinally disposed with the magnetic field generating end upward, and thus, a dimension of the whole device is increased. Accordingly, there has been a problem that a location of the optical scanning device is limited.

The present invention has been made in consideration of the above-described points, and it is an object of the present invention to provide a mirror scanner that sufficiently drives the mirror and allows to perform optical scanning while keeping a dimension of the device down.

### SOLUTIONS TO THE PROBLEMS

The invention according to claim 1 is a mirror scanner comprising: a mirror having a first surface that reflects a light, the mirror being swingable about a swing axis; a permanent magnet disposed on a second surface which is a surface opposite of the first surface of the mirror; a yoke having a pair of magnetic field generating ends, a pair of extending portions and a coupling portion, the pair of magnetic field generating ends being disposed at positions facing the permanent magnet in the second surface side of the mirror, the coupling portions coupling respective one ends of the pair of extending portions and the pair of magnetic field generating ends being formed on respective other ends of the pair of extending portions, the pair of extending portions and the coupling portion extending along the second surface of the mirror; and a coil wound around each of the pair of extending portions of the yoke.

### BRIEF DESCRIPTION OF THE DRAWINGS

FIG 1 is a drawing illustrating a configuration of a whole mirror scanner according to this example.
FIG 2A is a drawing illustrating a positional relation between a mirror main body and a yoke.
FIG 2B is a drawing illustrating the yoke and a jig that sandwiches the yoke.
FIG 3 is a drawing illustrating a configuration of a mirror scanner according to a comparative example.
FIG 4 is a drawing illustrating a positional relation between a mirror main body and a yoke according to the comparative example.
FIG 5 is a drawing illustrating a relation between a drive current and an oscillation angle of the mirror for each of the example and the comparative example.

### DESCRIPTION OF PREFERRED EMBODIMENTS

The following describes a preferred example of the present invention in detail. In the description in the following example and the attached drawings, an identical reference numeral is attached to a substantially identical or equivalent part.

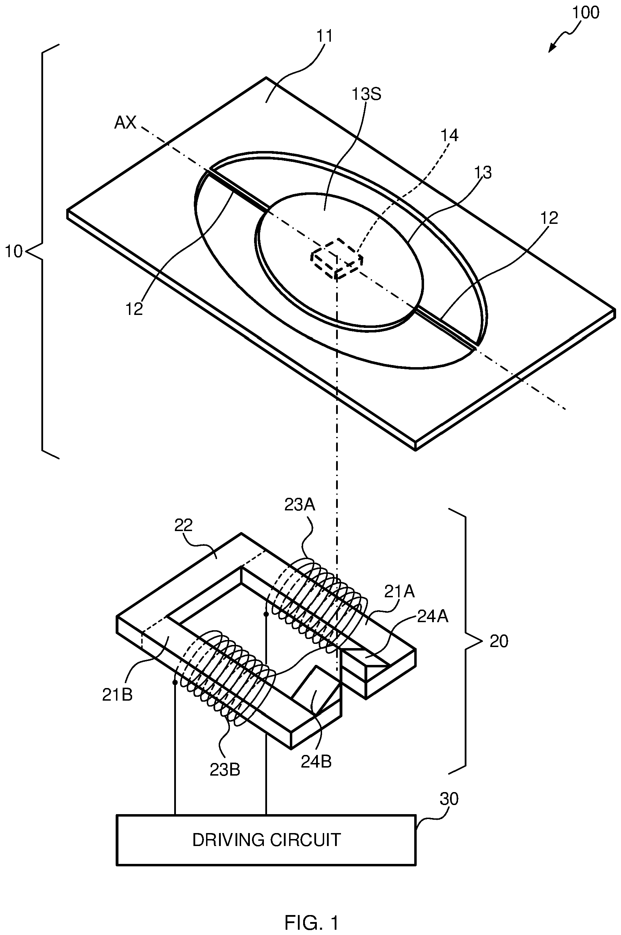

FIG 1 is a perspective view illustrating an overall configuration of a mirror scanner 100 according to the example. The mirror scanner 100 is an optical scanning device that performs an optical deflection operation by periodically swinging a movable mirror.

The mirror scanner 100 has a mirror main body (hereinafter simply referred to as a main body) 10 that performs an optical deflection, and a yoke 20 and a driving circuit 30 as a magnetic field source. The mirror scanner 100 of this example is a magnetic-drive type MEMS device that operates the main body 10 by applying a magnetic field generated by the yoke 20 and the driving circuit 30 to the main body 10.

The main body 10 includes a plate-shaped support plate 11 as a supporting portion, a pair of torsion bars 12 extending along a swing axis AX from the support plate 11, and a mirror 13 swingably supported by the support plate 11 and the torsion bars 12. Each of the torsion bars 12 has one end fixed to the support plate 11 and the other end fixed to the mirror 13. The mirror 13 swings with respect to the support plate 11 with the torsion bars twisting about the swing axis.

For example, the support plate 11, the torsion bars 12, and the mirror 13 are formed of a semiconductor material. The main body 10 made of the support plate 11, the torsion bars 12, and the mirror 13 can be integratedly formed by processing, for example, a semiconductor wafer.

The mirror 13 has a light reflecting surface 13S as a flat plate-shaped member and having a reflectivity with respect to a predetermined light. The light reflecting surface 13S may, for example, be formed by depositing a metal on a surface of the plate-shaped material forming the mirror 13. The light reflecting surface 13S of the mirror 13 and the opposite side surface have center portions where a permanent magnet 14 is disposed. In the following description, the light reflecting surface 13S of the mirror 13 is also referred to as a first surface and the opposite side surface of the light reflecting surface 13S is also referred to as a second surface.

In the mirror scanner 100 of this example, the magnetic field generated by the yoke 20 and the driving circuit 30 acts on the permanent magnet 14, and the mirror 13 swings with a reference position as a center. For example, the mirror 13 swings with the position where the light reflecting surface 13S comes into parallel to the plate surface of the support plate 11 as the reference position. That is, the mirror 13 turns in a turning direction in a positive direction and a negative direction about the swing axis with the reference position as a 0-degree position.

Corresponding to the swing of the mirror 13, an angle of the light reflecting surface 13S viewed from the reference position (that is, a swing angle) changes. Specifically, when the magnetic field is applied to the permanent magnet 14 such that the torsion bars 12 twist about the swing axis AX, the mirror 13 swings about the swing axis AX while being supported by the support plate 11. The light emitted from a light source (not illustrated) is reflected from the light reflecting surface 13S of the mirror 13, and its reflection direction changes by the swing of the mirror 13, and thus, the optical scanning is performed. Note that while the scanning direction one-dimensionally changes since there is one swing axis in this example, it is possible to perform two-dimensional scanning by causing the mirror 13 to reflect the light emitted from, for example, a plurality of light sources (for example, a multi-emitter) linearly aligned.

The yoke 20 is constituted of a soft magnetic material. The yoke 20 includes core portions 21A and 21B as a pair of core portions extending approximately parallel to one another along the same direction and a coupling portion 22 coupling the core portion 21A to the core portion 21B. That is, the yoke 20 has a C shape (a U shape) in this example.

A first coil portion 23A is formed of a steel wire wound around the core portion 21A of the yoke 20. A second coil portion 23B is formed of a steel wire wound around the core portion 21B. Note that the first coil portion 23A and the second coil portion 23B are configured by using one common steel wire in this example. That is, it is configured such that the current flows simultaneously to the first coil portion 23A and the second coil portion 23B. Note that the first coil portion 23A and the second coil portion 23B may be configured using respective separate steel wires, and the current that flows to each of them may be individually controllable.

The yoke 20 has magnetic field generating ends 24A and 24B as a pair of magnetic field generating end portions. The magnetic field generating end 24A is provided in the proximity of an end portion opposite of the connecting portion with the coupling portion 23 of the core portion 21A, and has a projecting shape projecting in a direction perpendicular to the extension direction of the core portion 21A. Similarly, the magnetic field generating end 24B is provided in the proximity of the end portion opposite of the connecting portion with the coupling portion 23 of the core portion 21B, and has a projecting shape projecting in a direction perpendicular to the extension direction of the core portion 21B.

In other words, the magnetic field generating ends 24A and 24B have a shape projecting in a direction perpendicular from a planar surface (that is, one planar surface constituted of surfaces of the core portion 21A, the core portion 21B, and the coupling portion 22) including each of the straight lines along the extension direction of the core portions 21A and 21B. For example, the magnetic field generating ends 24A and 24B are formed by adding, for example, a metallic material processed into a triangular prism shape in the proximity of each of the end portions of the core portion 21A and the core portion 21B as illustrated in FIG 1.

The driving circuit 30 is a circuit that applies a drive current to the first coil portion 23A and the second coil portion 23B. For example, the driving circuit 30 applies the alternating current for driving the mirror 13 to resonate to the first coil portion 23A and the second coil portion 23B as the drive current. This causes the yoke 20 to function as an electromagnet to generate an alternate current magnetic field from the magnetic field generating end 24A and the magnetic field generating end 24B.

In the mirror scanner 100 of this example, the core portions 21A and 21B of the yoke 20 are disposed to extend along the plate surface of the support plate 11 and the second surface of the mirror 13 at the reference position in the second surface (that is, a surface opposite of the light reflecting surface 13S) side of the mirror 13. For example, the yoke 20 is disposed such that the extension direction of the core portions 21A and 21B comes approximately parallel to the plate surface of the support plate 11 and the second surface of the mirror 13 at the reference position. The yoke 20 is disposed such that the magnetic field generating ends 24A and 24B are at positions facing the permanent magnet 14 in the second surface side of the mirror 13.

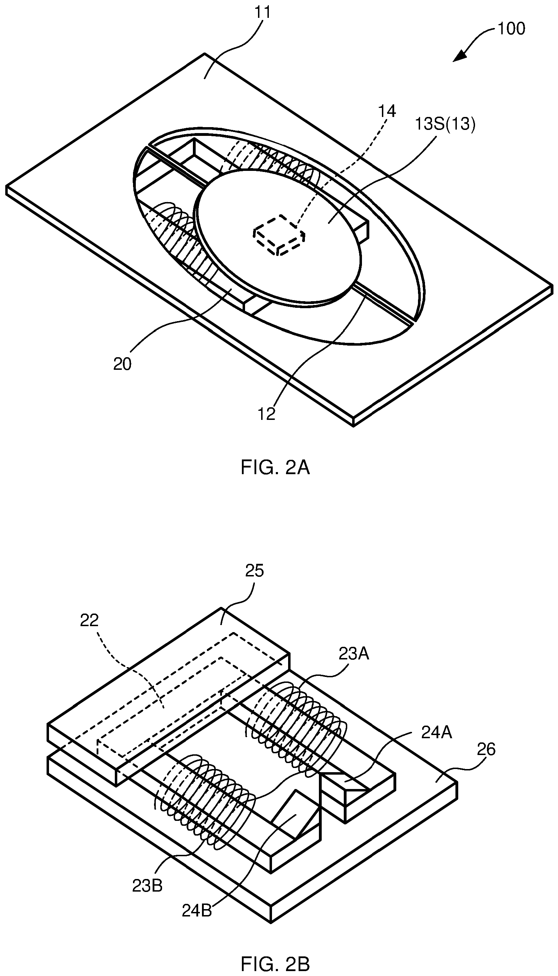

FIG 2A is a drawing illustrating a positional relation between the main body 10 and the yoke 20. Note that the driving circuit 30 is not illustrated here.

Note that the yoke 20 is fixed to a base 26 by a jig 25 as illustrated in FIG 2B, and is disposed at the position illustrated in FIG 2A. The jig 25 fixes the yoke 20 on the base 26 by sandwiching the coupling portion 22 of the yoke 20 in a direction perpendicular to the extension direction of the core portions 21A and 21B (that is, the direction perpendicular to the plate surface of the support plate 11). The jig 25 is, for example, constituted of a material high in thermal conductivity, such as aluminum, and of non-magnetic body. Besides the function of fixing the yoke 20, the jig 25 also has a function of dissipating heat generated in the yoke 20 by the driving of the mirror scanner 100 by the heat conduction.

As illustrated in FIG 2A, the mirror scanner 100 of this example, the yoke 20 is disposed such that the yoke 20 extends (that is, the core portions 21A and 21B extend along the second surface of the mirror 13 at the reference position) along a main surface of the main body 10 (that is, the plate surface of the support plate 11 and the second surface of the mirror 13 at the reference position). In view of this, the mirror scanner 100 has a width smaller in a direction perpendicular to the main surface of the main body 10. In other words, the mirror scanner 100 of this example has a small length in a height direction with a placement surface of the mirror 13 as a reference.

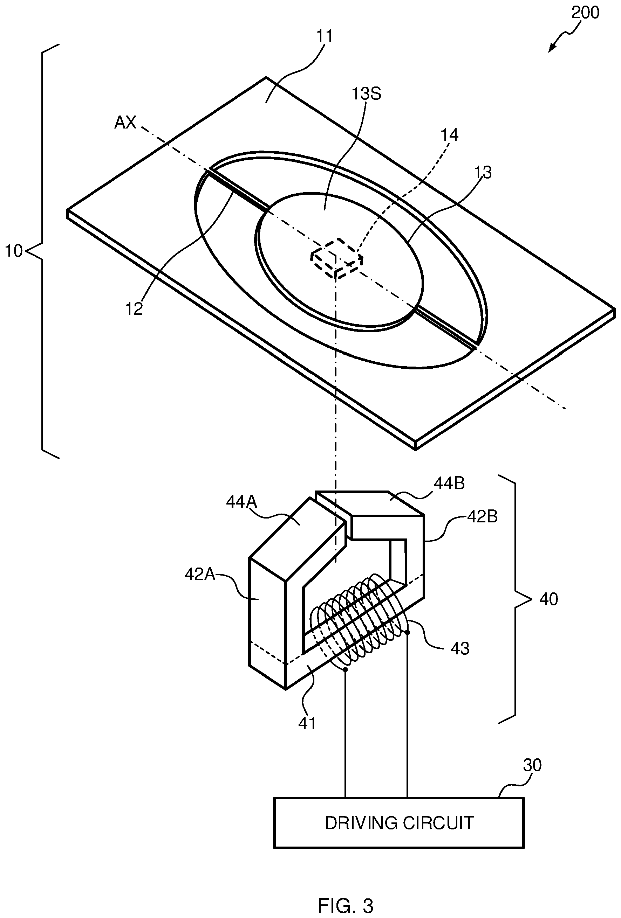

FIG 3 is a drawing illustrating a configuration of the mirror scanner 200 of a comparative example having a different shape and an arrangement of a yoke from those of the mirror scanner 100 of the example. The mirror scanner 200 of the comparative example is constituted of the main body 10, a yoke 40, and the driving circuit 30.

The yoke 40 has a C shape made of a core portion 41 and extending portions 42A and 42B extending parallel to one another from both ends of the core portion 41. A coil 43 is wound around the core portion 41.

The yoke 40 has magnetic field generating ends 44A and 44B extending continuously from end portions opposite of a connecting portion with the core portion 41 of the extending portions 42A and 42B. The magnetic field generating ends 44A and 44B are unlike the magnetic field generating ends 24A and 24B of the mirror scanner 100 of this example (see FIG 1), and do not project in a direction perpendicular to a planar surface including the respective straight lines along the extension directions of the extending portions 42A and 42B, and project in a direction forming a leading end of a C shape on this planar surface.

The yoke 40 is disposed such that the magnetic field generating ends 44A and 44B face the permanent magnet 14 in the second surface side of the mirror 13. Therefore, for example, when the mirror scanner 200 of the comparative example is horizontally placed, the yoke 40 is disposed such that the extension directions of the extending portions 42A and 42B are perpendicular directions (that is, a height direction) with the core portion 41 as a bottom surface.

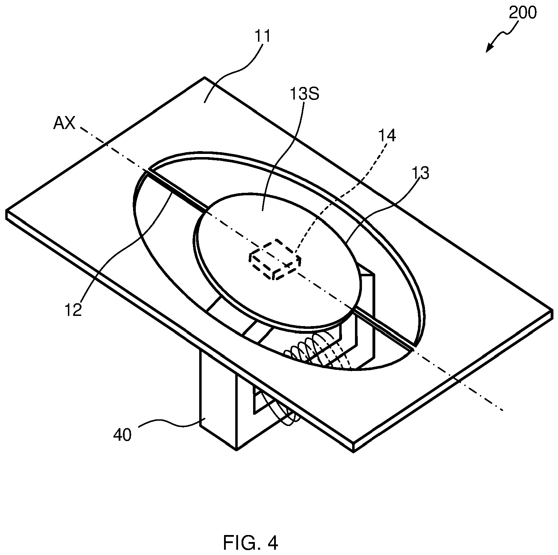

FIG 4 is a drawing illustrating a positional relation between the main body 10 and the yoke 40 in the mirror scanner 200 of the comparative example. Note that the driving circuit 30 is not illustrated here.

In the mirror scanner 200 of the comparative example, the yoke 20 is disposed such that the plate surface of the support plate 11 and the second surface of the mirror 13 at the reference position are perpendicular to the extending portions 42A and 42B. The magnetic field generating ends 44A and 44B are continuously extending from the respective end portions of the extending portions 42A and 42B. In view of this, the mirror scanner 100 has a large width in a direction perpendicular to the plate surface of the support plate 11 (that is, the height obtained by combining the main body 10 and the yoke 20 when the surface opposite of the surface facing the main body 10 of the yoke 20 is the bottom surface).

In contrast to this, in the mirror scanner 100 of this example, the magnetic field generating ends 24A and 24B have a shape projecting from the planar surface including the respective straight lines along the extension directions of the core portions 21A and 21B. In view of this, as illustrated in FIG 2A, the yoke 20 can be disposed such that the yoke 20 extends along the main surface of the main body 10 (for example, the extension directions of the core portions 21A and 21B come approximately parallel to the main surface of the main body 10).

Accordingly, in the mirror scanner 100 of this example, compared with the mirror scanner 200 of the comparative example, the width (that is, the length in the height direction with the placement surface of the yoke 20 as the reference) of the mirror scanner 100 in the direction perpendicular to the main surface of the main body 10 can be shortened. This ensures keeping the device dimension as the whole mirror scanner 100 small.

In the mirror scanner 200 of the comparative example, the coil 43 is positioned immediately below the permanent magnet 14. In view of this, in order not to cause the coil 43 to directly affect the operation of the permanent magnet 14, it is necessary to keep a distance between the permanent magnet 14 and the coil 43 by making the magnetic field generating ends 44A and 44B have a certain height or more. In contrast to this, in the mirror scanner 100 of this example, since the first coil portion 23A and the second coil portion 23B are disposed at a position displaced from immediately below the permanent magnet 14, the heights of the magnetic field generating ends 24A and 24B can be kept low.

In the mirror scanner 100 in this example, the coils are wound around the core portions 21A and 21B as the pair of core portions. The core portions 21A and 21B are disposed so as to extend (for example, to be approximately parallel) along the plate surface of the support plate 11 and the second surface of the mirror 13 at the reference position. In such a configuration, since the lengths of the core portion 21A and the core portion 21B do not affect the height of the mirror scanner 100, it is possible to increase the number of turns of the coils by extending the lengths of the core portions 21A, 21B as the portions around which the coils are wound without increasing the height of the mirror scanner 100.

The mirror scanner 100 in this example ensures increasing the number of turns of the coil wound around the core portion although the height is lower than that of the mirror scanner 200 in the comparative example. For example, when the widths of the mirror scanner 100 and the mirror scanner 200 are the same, that is, when the core portion 41 has a length the same as each of the lengths of the core portions 21A, 21B, the coil wire that can be wound around the core portion is approximately double. That is, it is possible to increase the number of turns of the coil while reducing the height and without changing the size in the width direction (that is, the length in the extension directions of the core portions 21A and 21B), and thus ensuring swinging the mirror 13 with a smaller drive current.

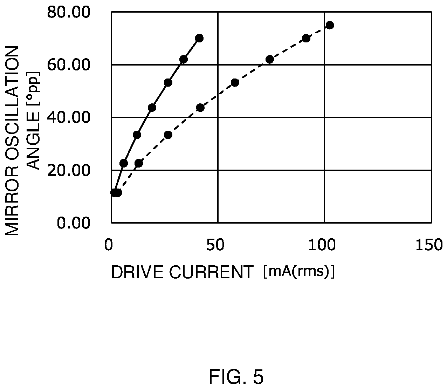

FIG 5 is a graph illustrating a relation between a drive current applied by the driving circuit 30 and an oscillation angle (that is, the maximum value of a swing angle with the reference position as the center) in the swing of the mirror 13. The horizontal axis indicates an effective value of the current value (mA) of the drive current, and the vertical axis indicates the oscillation angle of the mirror. Here, the mirror scanner 100 of this example is indicated by the solid line, and the mirror scanner 200 of the comparative example is indicated by the dashed line.

The mirror scanner 100 of this example ensures obtaining the same oscillation angle with the drive current of the current value of half or less of that of the mirror scanner 200 of the comparative example. For example, while the mirror scanner 200 of the comparative example needs the drive current of 100 mA or more of effective value to obtain the oscillation angle of 75°, the mirror scanner 100 of this example obtains the oscillation angle of 75° with the drive current of less than 50 mA of effective value.

Thus, the mirror scanner 100 of this example can obtain the equal force with a small electric power compared with that of the comparative example. Accordingly, with the mirror scanner 100 of this example, it is possible to perform the optical scanning equal to the conventional ones while reducing the power consumption.

Note that when the number of turns of coil is desired to be increased in the mirror scanner 200 of the comparative example, it is considered to wind coils around the extending portions 42A and 42B illustrated in FIG 3. However, the extending portions 42A and 42B extend in the direction perpendicular to the plate surface of the support plate 11 and the second surface of the mirror 13, and thus, a length corresponding to the number of turns of the coil is necessary, thereby resulting in an increased length (that is, the height of the mirror scanner 200) in the direction perpendicular to the plate surface of the support plate 11. Accordingly, the mirror scanner 200 of the comparative example cannot increase the number of turns of the coil while keeping the height of the mirror scanner 200 low.

As described above, the mirror scanner 100 of this example ensures keeping the height of the whole device low. Also, it is possible to increase the number of turns of the coil without increasing the height of the device. Accordingly, use of the mirror scanner 100 of this example ensures performing the optical scanning by sufficiently driving the mirror while reducing the device dimension and the electric power consumption.

When the temperature of the yoke increases, the resistance value of the conducting wire of the coil increases, which increases the power consumption. In view of this, the heat dissipation of the yoke is effective for reducing the power consumption. In the mirror scanner 100 of this example, the yoke 20 is fixed on the base 26 by the jig 25 as illustrated in FIG 2B. The jig 25 is constituted of the material high in thermal conductivity, such as aluminum, and fixes the whole coupling portion 22 so as to sandwich the whole coupling portion 22, and therefore, has a large area of a contact surface with the yoke 20. Accordingly, the heat of the yoke 20 can be efficiently dissipated.

Since it is possible to keep the height of the mirror scanner 100 low as described above, there is little limitation of location. Accordingly, for example, when it is used as an optical scanning device for mounting in a vehicle, it is possible to dispose the mirror scanner 100 in a space on a bumper, a dashboard, or the like of the vehicle.

Note that the present invention is not limited to the above-described embodiment. For example, the above-described embodiment has described the example in which the mirror 13 is swung about one swing axis AX. However, unlike this, the mirror 13 may be configured to be swung about two swing axes. For example, it is possible to swing the mirror 13 about the two swing axes by configuring the mirror swingable about the two mutually orthogonal swing axes, and disposing two yokes having a configuration similar to that of the yoke 20 of the above-described example such that respective pairs of core portions extend along a plate surface of a support plate while magnetic field generating ends face a permanent magnet.

The above-described example has described the case where the core portions 21A and 21B as the pair of core portions extend approximately parallel to one another along the same direction. However, the configuration is not limited to this, and the core portions 21A and 21B may have respective extension directions configured to form an angle of less than 180 degrees to one another. Also, the core portions 21A and 21B may have lengths different from one another.

The above-described example has described the case where the first coil portion 23A is wound around the core portion 21A and the second coil portion 23B is wound around the core portion 21B. However, a coil may be wound around only one of the core portions 21Aand 21B. A coil may be wound around the coupling portion 22.

### DESCRIPTION OF REFERENCE SIGNS

- 100: Mirror scanner
- 10: Main body
- 11: Support plate
- 12: Torsion bar
- 13: Mirror
- 13s: Light reflecting surface
- 14: Permanent magnet
- 20: Yoke
- 21a: Core portion
- 21b: Core portion
- 22: Coupling portion
- 23a: First coil portion
- 23b: Second coil portion
- 24a: Magnetic field generating end
- 24b: Magnetic field generating end
- 30: Driving circuit

## Claims

1. A mirror scanner (100, 200) comprising:
a mirror (13) having a first surface that reflects a light, the mirror being swingable about a swing axis;
a permanent magnet (14) disposed on a second surface which is a surface opposite of the first surface of the mirror ,
a yoke (20, 40) having a pair of magnetic field generating ends, a pair of extending portions (42a, 42b) and a coupling portion (22, 23), the pair of magnetic field generating ends being disposed at positions facing the permanent magnet in the second surface side of the mirror, the coupling portion coupling respective one ends of the pair of extending portions and the pair of magnetic field generating ends being formed on respective other ends of the pair of extending portions; and
a coil wound around each of the pair of extending portions of the yoke,
wherein the pair of extending portions and the coupling portion extend along the second surface of the mirror.

2. The mirror scanner according to claim 1, wherein
the pair of magnetic field generating ends of the yoke have a shape projecting toward the second surface of the mirror from the surface of the pair of extending portions.

3. The mirror scanner according to claim 1, comprising
a fixing portion that fixes a position of the yoke by sandwiching the coupling portion.

4. The mirror scanner according to any one of claims 1 to 3, wherein
the mirror swings about the swing axis with a reference position as a center, and
each of the pair of extending portions of the yoke extends along the second surface of the mirror at the reference position.

5. The mirror scanner according to any one of claims 1 to 4,
wherein the pair of extending portions extends along an axial direction of the swing axis.

## Patentansprüche

1. Spiegelscanner (100, 200), umfassend:
einen Spiegel (13) mit einer ersten Oberfläche, die Licht reflektiert, wobei der Spiegel um eine Schwenkachse schwenkbar ist;
einen Permanentmagneten (14), der auf einer zweiten Oberfläche angeordnet ist, die eine der ersten Oberfläche des Spiegels gegenüberliegende Oberfläche ist,
ein Joch (20, 40) mit einem Paar magnetfelderzeugender Enden, einem Paar sich erstreckender Abschnitte (42a, 42b) und einem Kopplungsabschnitt (22, 23), wobei das Paar magnetfelderzeugender Enden an Positionen angeordnet ist, die dem Permanentmagneten in der Seite der zweiten Oberfläche des Spiegels zugewandt sind, wobei der Kopplungsabschnitt jeweilige eine Enden des Paars sich erstreckender Abschnitte koppelt und das Paar magnetfelderzeugender Enden an jeweiligen anderen Enden des Paars sich erstreckender Abschnitte ausgebildet ist; und
eine Spule, die um jeden des Paars sich erstreckender Abschnitte des Jochs gewickelt ist,
wobei sich das Paar sich erstreckender Abschnitte und der Kopplungsabschnitt entlang der zweiten Oberfläche des Spiegels erstrecken.

2. Spiegelscanner nach Anspruch 1, wobei
das Paar magnetfelderzeugender Enden des Jochs eine Form aufweist, die in Richtung der zweiten Oberfläche des Spiegels von der Oberfläche des Paars sich erstreckender Abschnitte vorsteht.

3. Spiegelscanner nach Anspruch 1, umfassend
einen Befestigungsabschnitt, der eine Position des Jochs durch Einlegen des Kopplungsabschnitts fixiert.

4. Spiegelscanner nach einem der Ansprüche 1 bis 3, wobei
der Spiegel um die Schwenkachse mit einer Referenzposition als Zentrum schwenkt, und
sich jeder des Paars sich erstreckender Abschnitte des Jochs entlang der zweiten Oberfläche des Spiegels an der Referenzposition erstreckt,

5. Spiegelscanner nach einem der Ansprüche 1 bis 4,
wobei sich das Paar sich erstreckender Abschnitte entlang einer axialen Richtung der Schwenkachse erstreckt.

## Revendications

1. Dispositif de balayage à miroir (100, 200) comprenant :
un miroir (13) ayant une première surface qui réfléchit une lumière, le miroir pouvant être pivoté autour d'un axe de pivotement ;
un aimant permanent (14) disposé sur une seconde surface qui est une surface opposée de la première surface du miroir,
une armature (20, 40) ayant une paire d'extrémités de génération de champ magnétique, une paire de portions en extension (42a, 42b) et une portion de couplage (22, 23), la paire d'extrémités de génération de champ magnétique étant disposées à des positions faisant face à l'aimant permanent dans le côté de la seconde surface du miroir, la portion de couplage couplant des extrémités respectives de la paire de portions en extension et la paire d'extrémités de génération de champ magnétique étant formées sur d'autres extrémités respectives de la paire de portions en extension ; et
une bobine enroulée autour de chacune de la paire de portions en extension de l'armature,
dans lequel la paire de portions en extension et la portion de couplage s'étendent le long de la seconde surface du miroir.

2. Dispositif de balayage à miroir selon la revendication 1, dans lequel la paire d'extrémités de génération de champ magnétique de l'armature ont une forme en projection vers la seconde surface du miroir depuis la surface de la paire de portions en extension.

3. Dispositif de balayage à miroir selon la revendication 1, comprenant une portion de fixation qui fixe une position de l'armature en prenant en sandwich la portion de couplage.

4. Dispositif de balayage à miroir selon l'une quelconque des revendications 1 à 3, dans lequel
la mémoire pivote autour de l'axe de pivotement avec une position de référence à titre de centre, et
chacune de la paire de portions en extension de l'armature s'étend le long de la seconde surface du miroir à la position de référence.

5. Dispositif de balayage à miroir selon l'une quelconque des revendications 1 à 4,
dans lequel la paire de portions en extension s'étend le long d'une direction axiale de l'axe de pivotement.
